# EUROPEAN PATENT SPECIFICATION

(11) **EP 1 650 044 B1**
(45) Date of publication and mention of the grant of the patent: **19.09.2012**
(21) Application number: 04747457.2
(22) Date of filing: 07.07.2004
(51) Int. Cl.: B41M 5/00, B41J 2/21, C09D 11/00

(54) **INK JET RECORDING METHOD AND INK JET PRINTER**
TINTENSTRAHLAUFZEICHNUNGSVERFAHREN UND TINTENSTRAHLDRUCKER
PROCEDE D'IMPRESSION A JET D'ENCRE ET IMPRIMANTE A JET D'ENCRE

(30) Priority: 07.07.2003 JP 2003271357
(43) Date of publication of application: 26.04.2006
(73) Proprietor: Sony Corporation, Tokyo (JP)
(72) Inventor: OKUBO, Miwa, Tokyo (JP)
(74) Representative: Müller - Hoffmann & Partner
(86) International application number: PCT/JP2004/009991
(87) International publication number: WO 2005/002867

(56) References cited:
- EP-A1- 0 580 449
- EP-A1- 0 678 396
- JP-A- 5 254 239
- JP-A- 9 099 628
- JP-A- 2001 301 199
- JP-A- 2001 301 199
- JP-A- 2001 315 385
- US-B1- 6 497 478

## Description

### TECHNICAL FIELD

The present invention relates to an ink-jet recording method and an ink-jet printer, in which a color image is formed at high speed and in a high-definition manner.

### BACKGROUND ART

An ink-jet recording method is a method of recording an image, a character or the like by spraying minute droplets of ink to be attached to a recording material, and there are various operational principles represented by a deflection method, a cavity method, a thermal ink-jet method, a slit jet method, a spark jet method and the like.

A printer which employs an ink-jet recording method is capable of high-speed printing with less noise and is multicolored with ease. Further, the printer has a characteristic that a development-fixing process needed in a laser printer is not required, for example. For this reason, the printer has widely been used for a variety of uses as printing apparatuses for documents, color images and the like. Accordingly, lately, it has been hoped that printers employing an ink-jet recording method can execute higher image-quality recording at higher speed.

In order to meet this demand for high-speed recording, what is called a line head which has an ejection range approximately equal to the width of a sheet of paper to be photographically printed has been studied as described in Japanese laid-open patent publication No. 2001-301199, Japanese Published Patent Application No. 2001-315385 and the like.

In a line head type ink-jet printer, droplets of ink are shot onto a recording material at intervals shorter than those in a serial-type ink-jet printer. For that reason, there is a demand that inks have quicker penetrating and drying properties. Specifically, if photographic printing is executed using inks with less penetrating and drying properties, the next droplet of ink is shot onto a recording material before an earlier droplet of ink penetrates into the recording material sufficiently, and as a result, an ink buildup is made on the surface of the recording material. This ink buildup results in uneven concentration after dried, causing deterioration in image quality.

On the other hand, as a technique for improving the penetrating and drying properties of inks, the following proposals and the like have been made in the past;
(1) To add specific surfactants to inks: Japanese Published Patent Application No. S55-29546, Japanese Examined Patent Publication No. S58-6752 and others,
(2) In an ink-jet printer, to select a printing operation mode in which color inks whose surface tension is less than 40dyn/cm at 23°C are discharged or a printing operation mode in which a black ink whose surface tension is 40dyn/cm or more at 23°C is discharged: Japanese Patent No. 3277609,
(3) If color recording liquids of different colors are used, to make the viscosity of the recording liquids approximately equal: Japanese Published Patent Application No. S60-197776,
(4) To use a recording material having specific water absorbency: Japanese Patent No. 2618359.

However, in line-head type ink-jet printers described in Japanese Published Patent Application No. 2001-315385 and No. 2001-301199 and the like, when color printing is executed, the interval between a discharge of an ink of a first color and a discharge of an ink of a second color (hereinafter referred to as a color interval) is typically 200 msec or less. This is a color interval considerably shorter than the above color interval of a serial printer, which is approximately 1 to 2 secs. Therefore, there has been a problem in which if the above-described inks of (1) to (3) are used, the penetrating and drying properties of the inks are insufficient, and it is difficult to obtain an image of high quality without blots.

EP 0 678 396 Al discloses a recording paper made of a base paper mainly composed of pulp fibers and a filler, which is coated by a coating solution containing particles. The base paper of this recording paper has a coefficient of absorption K. of not less than 10 mL/(m² · msec^{1/2}) at a contact time of not longer than 4 msec. Furthermore, it discloses a system where ink with a high surface tension and ink with a low surface tension are used in combination. An ink with a low surface tension has a surface tension of 25 to 35 dyne/cm. Furthermore, a minimum ink-shoot time interval for adjacent dots with different colors was 30 msec.

### DISCLOSURE OF INVENTION

Accordingly, the present invention aims to obtain a high-definition image without blots or a mixture of colors if an ink-jet printer which executes high-speed printing with the color interval being 200 msec or less is used.

This is achieved by the subject matter of the independent claims.

In order to achieve the above aim, the present invention provides an ink-jet recording method where recording is executed by discharging inks of a plurality of colors from a discharge opening as droplets of ink to be attached onto a recording material, in which in the case where the interval between a discharge of an ink of a first color and a discharge of an ink of a second color is 200 msec or less, inks whose surface tension is 25 to 45mN/m at 23°C are used for the inks of each color.

According to the ink-jet recording method of the present invention, in the case where photographic printing is executed with the color interval being 200 msec or less such as in the case of color printing executed at high speed using a line head type ink-jet printer, inks whose surface tension is 25 to 45mN/m at 23°C are used and so a high-definition image without blots and a mixture of colors can be obtained. On the contrary, if the surface tension of ink is less than 25mN/m, the wetness of the ink becomes excessive and so the ink is also attached in the vicinity of a nozzle, making the discharging properties of the ink deteriorated and therefore the ink is prevented from being sprayed in a desired direction, which is not favorable. On the other hand, if the surface tension of ink is over 45mN/m, the penetrating property of the ink with respect to a recording material becomes lowered, and so color mixture deteriorates, causing uneven ink penetration, which is not favorable.

### BRIEF DESCRIPTION OF DRAWINGS

FIG. 1 is a partly sectional perspective view showing the overall structure of a line-head type ink-jet printer;
FIG. 2 is a sectional side view of the line-head type ink-jet printer of FIG. 1;
FIG. 3 shows a line head: A is a plan view thereof, and B is a bottom view thereof;
FIG. 4A is an A-A sectional view of the line head of FIG. 3, and B is a B-B sectional view thereof;
FIG. 5 is a diagram showing a relationship between the color interval and penetration unevenness; and
FIG. 6 is a diagram showing a relationship between the color interval and penetration unevenness.

### BEST MODE FOR CARRYING OUT THE INVENTION

Hereinafter, the present invention will be explained in detail. Note that in the drawings, the same numerals represent the same or similar components.

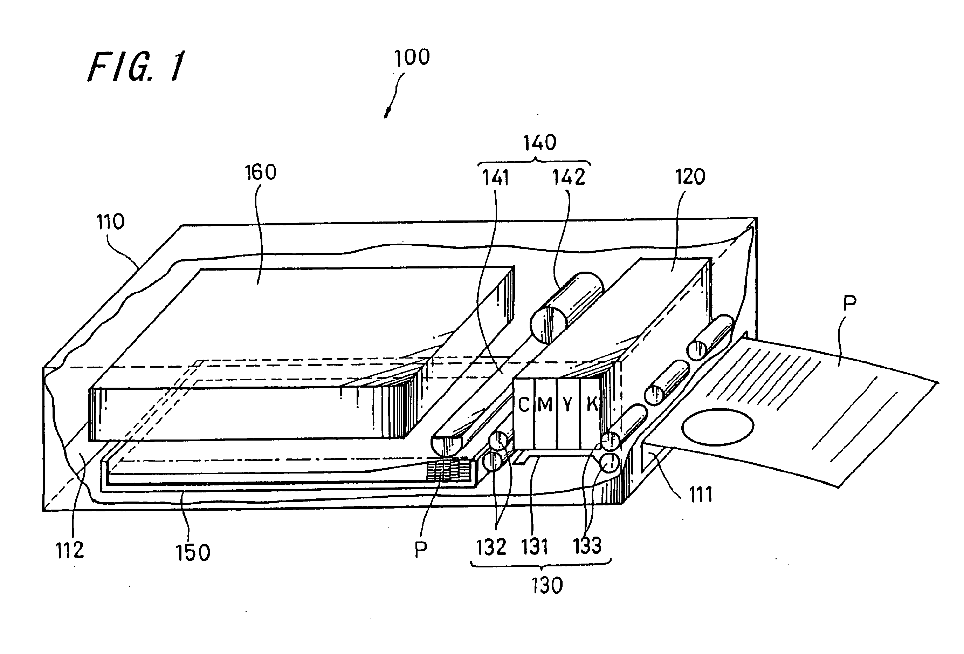

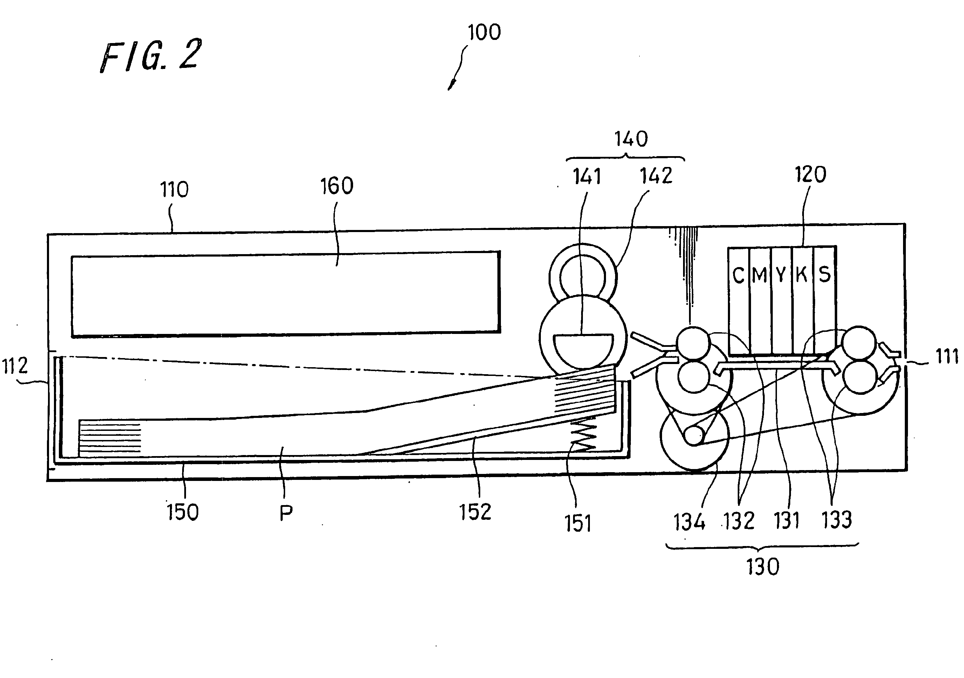

FIG. 1 shows the overall structure of a line head type ink-jet printer 100 which is an embodiment of the present invention. Note that FIG. 1 is a partly sectional perspective view of the line head type ink-jet printer 100. FIG. 2 is a sectional side view thereof.

Regarding this ink-jet printer 100, a casing 110 is shaped like a rectangular parallelepiped. In the casing are provided a line head 120, a paper conveyance portion 130, a paper feed portion 140, a paper tray 150, an electric circuit portion 160 and the like.

In a side surface at one end of the casing 110 is provided a paper discharge slot 111 for a sheet of paper P, and in a side surface at the other end is provided a tray ejection slot 112 for a paper tray 150.

In the line head 120 are provided line heads for four colors of cyanogen (C), magenta (M), yellow (Y) and black (K). Each line head 120 has a heater element as a drive element which discharges droplets of ink, and has a recording range which is approximately equal to the width of the sheet of paper P.

Further, this line head 120 has a PNM (Pulse Number Modulation) function which modulates the diameter of a dot according to the number of drops of ink.

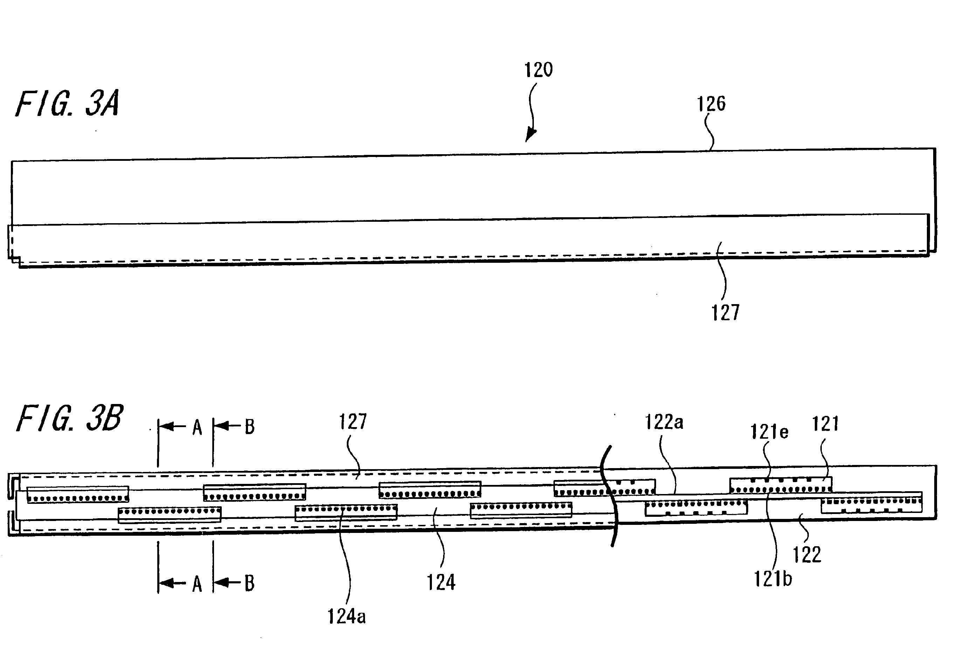

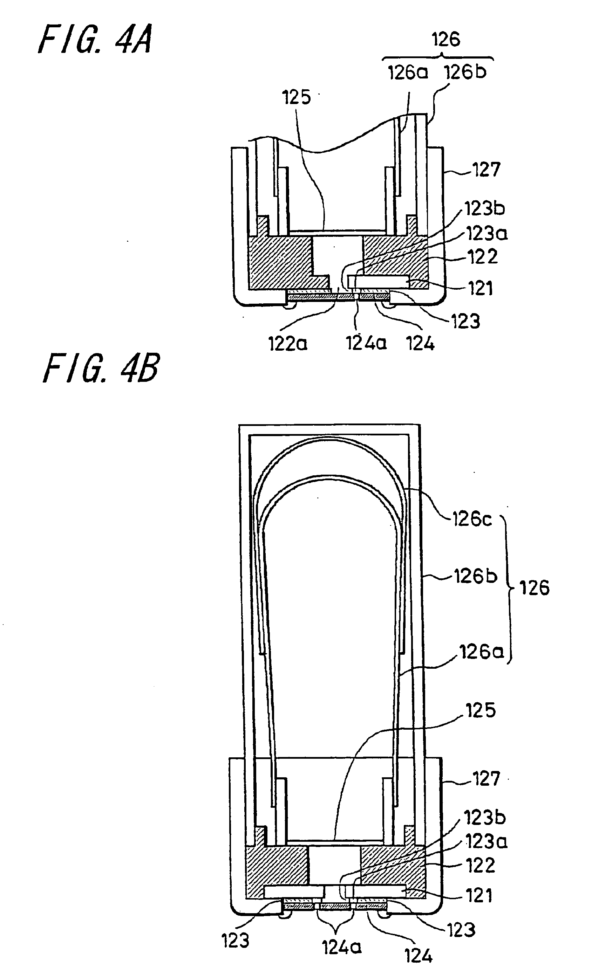

FIGS. 3A and 3B are a plan view and a bottom view of a line head 120 for one color, respectively. FIGS. 4A and 4B are an A-A sectional side view and a B-B sectional side view of FIG. 3B, respectively.

This line head 120 includes a linear head frame 122, a plurality of head chips 121 attached to the surface on one side of the head frame 122, and an ink tank 126 provided on the other surface of the head frame 122.

In the head frame 122 is formed a slit-like ink supply hole 122a at the center thereof, and on both sides of this ink supply hole 122a are disposed the head chips 121 in a zigzag manner. On the ink supply hole 122a side on each head chip 121 are aligned a plurality of heater elements 121b, and on the other side are aligned connection terminals 121e corresponding to the heater elements 121b.

On the head chips 121 is provided a nozzle plate 124 having a plurality of nozzles 124a with a member 123 to form a plurality of ink liquid rooms 123a and flow paths 123b placed in between.

The ink tank 126 has a dual structure of a bag 126a and an outer casing 126b, and between the bag 126a and the outer casing 126b is a spring member 126c which expands the bag 126a toward the outside. Further, at the bottom of the ink tank 126 is provided a filter 125 which prevents dust, aggregation products of ink constituents or the like from the ink tank 126 from entering the side of the nozzles 124a.

An electrical wiring 127 made from an FPC (flexible printed circuit board) is attached to a portion extending from above the head chips 121 to the outer circumferential surface of the ink tank 126 through the outside of the head frame 122. The electrical wiring 127 is to supply a power and an electric signal to the head chips 121, and is connected to the connection terminals 121e of the head chips 121.

Generally, this ink-jet printer 100 operates as follows. The ink-jet printer 100 is switched on in the state in which a predetermined number of sheets of paper P are stored in the paper tray 150, and on the input of a printing signal from outside, a paper support 152 lifts up one end of the sheets of paper P by means of a spring 151 to be pressed against a paper feed roller 141. Then, the paper feed roller 141 is driven by a paper feed motor 142 to rotate, and so one sheet of paper P is conveyed from the paper tray 150 to a paper conveyance roller 132.

Subsequently, the paper conveyance roller 132 and a paper conveyance roller 133 are driven by a paper conveyance motor 134 to rotate. Thus, the paper conveyance roller 132 conveys the sheet of paper P to a paper conveyance guide 131. Next, with the line head 120 operating at a predetermined timing, a drive voltage is applied to the heater elements 121b. Thus, bubbles are generated in ink on the surfaces of the heater elements 121b, droplets of ink are discharged from the nozzles 124a and then are attached onto the sheet of paper P, and so an image formed of dots, such as a character or photograph, is recorded. Then, the sheet of paper P conveyed is discharged from the paper discharge slot 111 by the paper conveyance roller 133.

An ink-jet recording method of the present invention is characterized in that in the case where the above line head type ink-jet printer 100 is driven with the color interval being 200 msec or less, preferably 50 to 200 msec, inks whose surface tension is 25 to 45mN/m at 23°C are used for inks of each color.

If the surface tension of ink is less than 25mN/m, the wetness of the ink becomes excessive and so the ink is also attached in the vicinity of a nozzle, making the discharging properties of the ink deteriorated and therefore the ink is prevented from being sprayed in a desired direction, which is not favorable. On the other hand, if the surface tension of ink is over 45mN/m, the penetrating properties of the ink against a recording material are lowered, and so color mixture deteriorates, causing uneven ink penetration, which is not favorable.

Hereupon, surface tension is measured in accordance with Wilhelmy (Plate) method.

Further, not limited to the above-described line head type ink-jet printer, the ink-jet recording method of the present invention will be applied to ink-jet recording for a variety of ink-jet printers, as long as the printers are driven with the color interval being 200 msec or less, preferably 50 to 200 msec.

The constituents of inks used in the present invention can be similar to those known ink-jet inks, and surface tension is adjusted by adding surfactants or the like. Therefore, ones prepared from color materials, solvents (water and water-soluble organic solvents), surfactants and the like can be used as inks. As the color materials, water-soluble dyes represented by direct dyes, acid dyes, basic dyes, reactive dyes and the like are suitable. Specifically, C. I. acid yellow 17, 23, 42, 44, 79, 142; C. I. acid red 1, 8, 13, 14, 18, 26, 27, 35, 37, 42, 52, 82, 87, 89, 92, 97, 106, 111, 114, 115, 134, 186, 249, 254, 289; C. I. acid blue 9, 29, 45, 92, 249; C. I. acid black 1, 2, 7, 24, 26, 94; C. I. food yellow 3, 4; C. I. food red 7, 9, 14; C. I. food black 1, 2; C. I. direct yellow 1, 12, 24, 26, 33, 44, 50, 86, 120, 132, 142, 144; C. I. direct red 1, 4, 9, 13, 17, 20, 28, 31, 39, 80, 81, 83, 89, 225, 227; C. I. direct orange 26, 29, 62, 102; C. I. direct blue 1, 2, 6, 15, 22, 25, 71, 76, 79, 86, 87, 90, 98, 163, 165, 199, 202; C. I. direct black 19, 22, 32, 38, 51, 56, 71, 74, 75, 77, 154, 168, 171; C. I. basic yellow 1, 2, 11, 13, 14, 15, 19, 21, 23, 24, 25, 28, 29, 32, 36, 40, 41, 45, 49, 51, 53, 63, 64, 65, 67, 70, 73, 77, 87, 91; C. I. basic red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109, 112; C. I. basic blue 1, 3, 5, 7, 9, 21, 22, 26, 35, 41, 45, 47, 54, 62, 65, 66, 67, 69, 75, 77, 78, 89, 92, 93, 105, 117, 120, 122, 124, 129, 137, 141, 147, 155; C. I. basic black 2, 8; C. I. reactive black 3, 4, 7, 11, 12, 17; C. I. reactive yellow 1, 5, 11, 13, 14, 20, 21, 22, 25, 40, 47, 51, 55, 65, 67; C. I. reactive red 1, 14, 17, 25, 26, 32, 37, 44, 46, 55, 60, 66, 74, 79, 96, 97; C. I. reactive blue 1, 2, 7, 14, 15, 23, 32, 35, 38, 41, 63, 80, 95, and the like can be mentioned, for example.

The amount of a color material added in an ink stands at 1 to 10%, more preferably 3 to 5%, with respect to the mass of the ink, and is determined considering the viscosity, drying properties, discharging stability and coloring properties of the ink and the conservation stability of a print.

As a solvent, water is mainly used, however, an organic solvent may be added if necessary for the purpose of improving the solubility and dispersibility of a color material to water, preventing an ink from drying, and so forth.

As suitable examples for organic solvents: lower alcohols such as ethanol and 2-propanol; polyhydric alcohols such as ethylene glycol, diethylene glycol, triethylene glycol, polyethylene glycol, polypropylene glycol, 1,5 pentanediol, 1,6 hexanediol, glycerol, 1,2,6-hexanetriol, 1,2,4-butanetriol and petriol; polyhydric alcohol alky ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether and propylene glycol monoethyl ether; polyhydric alcohol allyl ethers such as ethylene glycol monophenyl ether and ethylene glycol monobenzyl ether; nitrogen-containing heterocyclic compounds such as N-methyl-2-pyrrolidone, N-hydroxyethyl-pyrrolidone, 1,3-dimethylimidazolidinone, ε-caprolactam and γ-butyrolactone; amides such as formamide, N-methylformamide and N-N-dimethylformamide; amines such as monoethanolamine, diethanolamine, triethanolamine, monoethylamine, diethylamine and triethylamine; sulfur-containing compounds such as dimethylsulfoxide, sulfolane and thiodiethanol; and the like can be obtained, for example.

The amount of an organic solvent added stands at 5 to 50%, more preferably 10 to 35%, with respect to the mass of an ink, and is determined considering the viscosity, drying properties, discharging stability of the ink and the like, as in the case of a color material.

A surfactant can be added to adjust the surface tension of an ink and to improve the penetrability of the ink to a recording material.

As surfactants: anion surfactants, cation surfactants, nonionic surfactants and ampholytic surfactants can be used. As the anion surfactants: carboxylates, sulfates, sulfonates, phosphates and the like can be obtained. As the cation surfactants: higher alkylamines, higher alkyl halides, higher fatty acids, higher fatty acid amides and the like can be obtained. As the nonionic surfactants: polyethylene glycols, polyhydric alcohols and the like can be obtained. As the ampholytic surfactants: carboxylic acid type ampholytic surfactants, sulfate ester type ampholytic surfactants, sulfonate-type ampholytic surfactants, phosphate ester type ampholytic surfactants and the like can be obtained.

Further, pH adjusters such as amines including diethanol amine and triethanol amine, alkali metal hydroxides including lithium hydroxide, sodium hydroxide and potassium hydroxide, and alkali metal carbonates including ammonium hydroxide, quaternary ammonium hydroxides, quaternary phosphonium hydroxides, lithium carbonate, sodium carbonate and potassium carbonate; chelating reagents such as sodium ethylenediaminetetraacetate, sodium nitrilotriacetate, sodium hydroxyethylethylenediaminetriacetate, sodium diethylenetriaminepentaacetate and sodium uramildiacetate; preservatives such as sodium dehydroacetate, sodium sorbate, 2-pyridinethiol-1-sodiumoxide, sodium benzoate and sodium pentachlorophenol; antirusts such as acid subsulfate, sodium thiosulfate, ammonium thiodiglycolic acid, diisopropylammonium nitrite, pentaerythritol tetranitrate and dicyclohexylammonium nitrite; others such as the ultraviolet absorber proposed in Japanese Published Patent Application No. H9-227811; and the like can be added to ink accordingly.

Meanwhile, in the present invention, as recording materials on which ink-jet recording is performed, other than plain paper, ink-jet recording sheets such as coated paper having a porous coating layer on the recording surface side, glossy paper whose recording surface is a glossy surface, and OHP recording sheets each having a porous coating layer on a transparent base material and the like can be obtained; in particular, it is desirable that a recording material whose ink absorption amount in 100 msec is 15mL/m² or more, more preferably 18 to 40mL/m², be used in terms of the prevention of uneven ink penetration. If the absorption amount exceeds 40mL/m², image quality tends to deteriorate, as blots are generated, excessive penetration of ink deep into the recording material causes the photographic printing concentration to be lowered and so forth.

### [Practice Examples]

### Practice Examples 1 and 2 and Comparative Examples 1 and 2

### (1) Preparation of Inks

Ink sets each consisting of yellow (Y), magenta (M) and cyanogen (C), used in Practice Examples 1 and 2 and Comparative Examples 1 and 2, were prepared by mixing and dissolving the constituents in Tables 1 and 2.

**[Table 1]**

| | Practice Example 1 | | | Practice Example 2 | | |
|---|---|---|---|---|---|---|
| Ink Composition (Mass Part) | Y | M | C | Y | M | C |
| C. I. Direct Yellow 144 | 3.5 | - | - | 3.5 | - | - |
| C. I. Acid Red 52 | - | 3.5 | - | - | 3.5 | - |
| C. I. Direct Blue 199 | - | - | 3.5 | - | - | 3.5 |
| Ethylene Glycol | 10.0 | 10.0 | 10.0 | 10.0 | 10.0 | 10.0 |
| Diethylene Glycol | 10.0 | 10.0 | 10.0 | 10.0 | 10.0 | 10.0 |
| Isopropanol | - | - | - | 5.0 | 5.0 | 5.0 |
| Surfactant | 0.5 | 0.5 | 0.5 | 0.1 | 0.1 | 0.1 |
| Water | 76.0 | 76.0 | 76.0 | 71.4 | 71.4 | 71.4 |
| | | | | | | |

| Evaluation | | | | | | |
|---|---|---|---|---|---|---|
| Surface Tension (mN/m) | 32 | 32 | 32 | 43 | 42 | 42 |
| Amount of Penetration (mL/m²) | 23 | 23 | 23 | 18 | 18 | 18 |
| PM (Epson Corp.) | | | | | | |
| QP (Konica Corp.) | 19 | 18 | 18 | 15 | 14 | 14 |

| | | | | | | |
|---|---|---|---|---|---|---|
| (*1) Nonipol 95, Toho Chemical Industry Co., Ltd. | | | | | | |

**[Table 2]**

| | Practice Example 1 | | | Practice Example 2 | | |
|---|---|---|---|---|---|---|
| Ink Composition (Mass Part) | Y | M | C | Y | M | C |
| C. I. Direct Yellow 144 | 3.5 | - | - | 3.5 | - | - |
| C. I. Acid Red 52 | - | 3.5 | - | - | 3.5 | - |
| C. I. Direct Blue 199 | - | - | 3.5 | - | - | 3.5 |
| Ethylene Glycol | 10.0 | 10.0 | 10.0 | 10.0 | 10.0 | 10.0 |
| Diethylene Glycol | 10.0 | 10.0 | 10.0 | 10.0 | 10.0 | 10.0 |
| Isopropanol | 2.0 | 2.0 | 2.0 | - | - | - |
| Surfactant | - | - | - | - | - | - |
| Water | 74.5 | 74.5 | 74.5 | 76.5 | 76.5 | 76.5 |
| | | | | | | |

| Evaluation | | | | | | |
|---|---|---|---|---|---|---|
| Surface Tension (mN/m) | 54 | 53 | 53 | 63 | 62 | 62 |
| Amount of Penetration (mL/m²) | 12 | 12 | 11 | 6 | 6 | 7 |
| PM (Epson Corp.) | | | | | | |
| QP (Konica Corp.) | 7 | 7 | 7 | 6 | 6 | 6 |

| | | | | | | |
|---|---|---|---|---|---|---|
| (*1) Nonipol 95, Toho Chemical Industry Co., Ltd. | | | | | | |

### (2) Surface Tension

As regards the inks of each color in Practice Examples 1 and 2 and Comparative Examples 1 and 2, the surface tension was measured with a fully automatic tensiometer (CBVP-Z Type, Kyowa Interface Science Co. Ltd). The results are shown in Tables 1 and 2.

### (3) Amount of Penetration

As regards the inks of each color in Practice Examples 1 and 2 and Comparative Examples 1 and 2, the amount of penetration to two kinds of ink-jet glossy photo paper commercially available (PM Photo Paper (Epson Corp.) and QP Thick DX (Konica Corp.)) in 100 msec was measured with a Bristow tester (KUMAGAI RIKI KOGYO CO.,LTD). The results are shown in Tables 1 and 2.

### (4) Penetration Unevenness, with Color Interval being 100 msec

Typically, deterioration in image quality is conspicuous at a photographically printed part where two colors are overlapped; even if there is no image deterioration at photographically printed part by a single color of the ink of yellow, magenta or cyanogen, it is possible that deterioration in an image could occur at each of photographically printed parts, where two colors are overlapped: red (mixture of yellow ink and magenta ink); green (mixture of yellow ink and cyanogen ink); and blue (mixture of magenta ink and cyanogen ink). Accordingly, the extent of penetration unevenness at each of those photographically printed parts, where two colors are overlapped, was evaluated as follows.

In this case, as a printer, a photographic printing tester in which the resolution was 600 dpi, one pixel was formed of a 20pL drop of one color, and the color interval until ink of a different color is attached was set to 100 msec was used.

The ink sets of Practice Examples 1 and 2 and Comparative Examples 1 and 2 were set in this photographic printing tester, and solid images of red (mixture of yellow ink and magenta ink), green (mixture of yellow ink and cyanogen ink) and blue (mixture of magenta ink and cyanogen ink) were photographically printed on the two kinds of ink-jet glossy photo paper commercially available (PM Photo Paper (Epson Corp.) and QP Thick DX (Konica Corp.)), respectively.

With visually observing photographic prints obtained, penetration unevenness was evaluated as follows.
5: excellent image quality with no unevenness
4: as a whole good image quality with some unevenness seen when looked closer
3: some unevenness occurred to the extent not affecting overall image quality
2: with unevenness
1: conspicuous unevenness to the extent that cannot be used

The results are shown in Table 3.

**[Table 3]**

| Ink Set | Surface Tension (mN/m) | Solid Image | Penetration Unevenness | |
|---|---|---|---|---|
| | | | PM (Epson Corp.) | QP (Konica Corp.) |
| Practice Example 1 | Y:33 | Red | 5 | 4 |
| | M:32 | Green | 5 | 4 |
| | C:32 | Blue | 5 | 4 |
| Practice Example 2 | Y:43 | Red | 4 | 3 |
| | M:92 | Green | 4 | 3 |
| | C:42 | Blue | 4 | 3 |
| Comparative Example 1 | Y:54 | Red | 2 | 1 |
| | M:53 | Green | 2 | 1 |
| | C:53 | Blue | 2 | 1 |
| Comparative Example 2 | Y:63 | Red | 1 | 1 |
| | M:62 | Green | 1 | 1 |
| | C:62 | Blue | 1 | 1 |

Judging from Table 3, it is understood that if the ink sets of Comparative Examples 1 and 2, in which the surface tension of the inks of each color is 53 to 62mN/m are used, penetration unevenness is conspicuous and image quality is greatly lowered; whereas if the ink set of Practice Example 1, in which the surface tension is 32 to 33mN/m is used, image quality becomes excellent. Further, regarding the ink set of Practice Example 2, in which the surface tension is 42 to 43mN/m, when photographically printed on a sheet of paper in which the amount of penetration in 100 msec is 14 to 15mL/m² (QP Thick DX (Konica Corp.)), there occurs unevenness to the extent that image quality is not affected; whereas when photographically printed on a sheet of paper in which the amount of penetration in 100 msec is 118mL/m² ((PM Photo Paper (Epson Corp.)), excellent image quality is obtained.

### (5) Relationship between Color Interval and Penetration Unevenness

In the photographic printing tester used in (4), the color interval was set to 50 to 400 msec as in Tables 4 and 5, solid images of red, green and blue were formed on the two kinds of ink-jet glossy photo paper commercially available (PM Photo Paper (Epson Corp.) and QP Thick DX (Konica Corp.)) respectively, similarly to (4) using inks which are 30, 45 and 52mN/m in surface tension, and each penetration unevenness was evaluated and classified into five grades similarly to (4).

Here, as the inks which are 30, 45 and 52mN/m in surface tension, inks whose composition is shown in Table 4 were used.

**[Table 4]**

| | Surface Tension 30 (mN/m) | | | Surface Tension 45(mN/m) | | | Surface Tension 52(mN/m) | | |
|---|---|---|---|---|---|---|---|---|---|
| Ink Composition (Mass Part) | Y | M | C | Y | M | C | Y | M | C |
| C. I. Direct Yellow 144 | 3.5 | - | - | 3.5 | - | - | 3.5 | - | - |
| C. I. Acid Red 52 | - | 3.5 | - | - | 3.5 | - | - | 3.5 | - |
| C. I. Direct Blue 199 | - | - | 3.5 | - | - | 3.5 | - | - | 3.5 |
| Ethylene Glycol | - | - | - | - | - | - | - | - | - |
| Diethylene Glycol | 20.0 | 20.0 | 20.0 | 20.0 | 20.0 | 20.0 | 20.0 | 20.0 | 20.0 |
| Isopropanol | | | | 2.0 | 2.0 | 2.0 | 1.0 | 1.0 | 1.0 |
| Surfactant | 1.0 | 1.0 | 1.0 | - | - | - | - | - | - |
| Water | 75.5 | 75.5 | 75.5 | 74.5 | 74.5 | 74.5 | 75.5 | 75.5 | 75.5 |
| | | | | | | | | | |

| Evaluation | | | | | | | | | |
|---|---|---|---|---|---|---|---|---|---|
| Surface Tension (mN/m) | 30 | 30 | 30 | 45 | 45 | 45 | 52 | 52 | 52 |

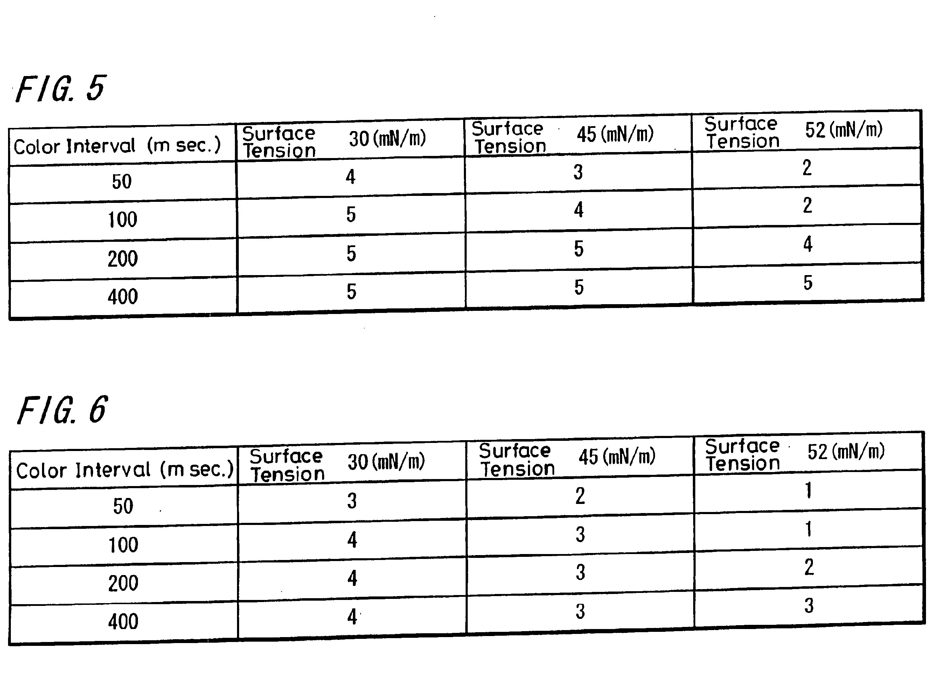

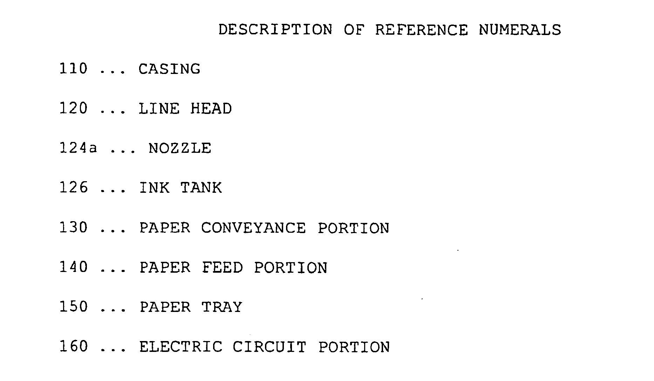

The results are shown in Tables 5 and 6 and FIGS. 5 and 6.

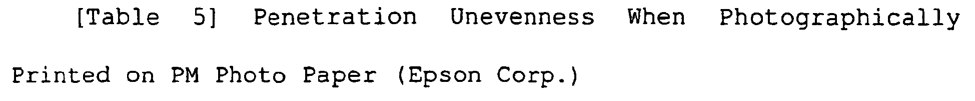

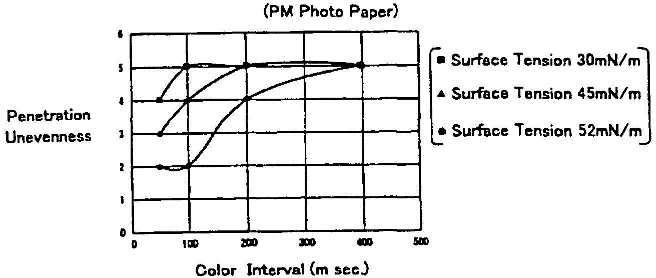

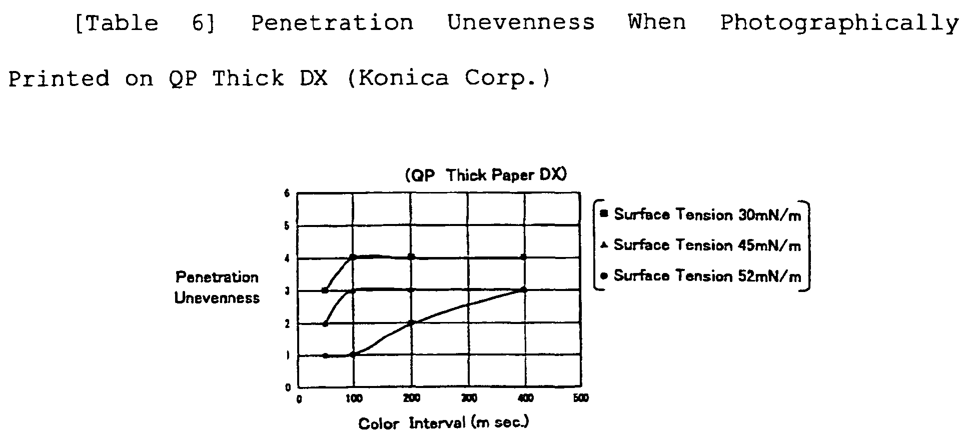

Judging from the results of Tables 5 and 6 and FIGS. 5 and 6, it is understood that the inks which are 30 to 45mN/m in surface tension and the ink which is 52mN/m in surface tension are greatly different with respect to penetration unevenness between photographic printing with 200 msec or less at color intervals and photographic printing with over 200 msec at color intervals, and it is therefore preferable that inks which are 45mN/m or less in surface tension be used to suppress penetration unevenness regarding photographic printing of 200 msec or less at color intervals.

### INDUSTRIAL APPLICABILITY

According to the present invention, in an ink-jet recording method, even if high-speed photographic printing is executed with the color interval being 200 msec or less, a high-definition image can be obtained without blots or a mixture of colors.

## Claims

1. An ink-jet recording method in which recording is executed by discharging inks of a plurality of colors from a discharge opening as droplets of ink to be attached onto a recording material,
wherein in the case where the interval between a discharge of an ink of a first color and a discharge of an ink of a second color is 200 msec or less, inks whose surface tension is 25 to 45mN/m at 23°C are used for said inks of each color, **characterized in that**
the ink absorption amount in 100 msec regarding said recording material is 15mL/m² or more.

2. An ink-jet recording method according to claim 1,
wherein inks are discharged using a line head (120).

3. Use of an ink-jet printer in which recording is executed by discharging inks of a plurality of colors from a discharge opening as droplets of ink to be attached onto a recording material,
wherein in the case where the interval between a discharge of an ink of a first color and a discharge of an ink of a second color is 200 msec or less, inks whose surface tension is 25 to 45mN/m at 23°C are used for said inks of each color, **characterized in that**
the ink absorption amount in 100 msec regarding said recording material is 15mL/m² or more.

4. Use of an ink-Jet printer according to claim 3.
wherein inks are discharged using a line head (120).

## Patentansprüche

1. Tintenstrahlaufzeichnungsverfahren, bei dem das Aufzeichnen durch Ausbringen von Tinte mit einer Vielzahl von Farben aus einer Ausbringöffnung als Tintentropfen, die an ein Aufzeichnungsmaterial anhaften sollen, durchgeführt wird,
wobei im Fall, bei dem das Intervall zwischen dem Ausbringen einer Tinte mit einer ersten Farbe und dem Ausbringen einer Tinte einer zweiten Farbe 200 msec oder weniger beträgt, Tinten, deren Oberflächenspannung 25 bis 45 mN/m bei 23°C betragen, für die Tinten jeder Farbe verwendet werden,
**dadurch gekennzeichnet, dass**
die Tintenabsorptionsmenge in 100 msec hinsichtlich des Aufzeichnungsmaterials 15 ml/m² oder mehr beträgt.

2. Tintenstrahlaufzeichnungsverfahren nach Anspruch 1,
wobei die Tinten unter Verwendung eines Zeilenkopfes (120) ausgebracht werden.

3. Verwendung eines Tintenstrahldruckers, bei dem das Aufzeichnen durch Ausbringen von Tinte mit einer Vielzahl von Farben aus einer Ausbringöffnung als Tintentropfen, die an ein Aufzeichnungsmaterial anhaften sollen, durchgeführt wird,
wobei im Fall, bei dem das Intervall zwischen dem Ausbringen einer Tinte mit einer ersten Farbe und dem Ausbringen einer Tinte einer zweiten Farbe 200 msec oder weniger beträgt, Tinten, deren Oberflächenspannung 25 bis 45 mN/m bei 23°C betragen, für die Tinten jeder Farbe verwendet werden,
**dadurch gekennzeichnet, dass**
die Tintenabsorptionsmenge in 100 msec hinsichtlich des Aufzeichnungsmaterials 15 ml/m² oder mehr beträgt.

4. Verwendung eines Tintenstrahldruckers nach Anspruch 3,
wobei die Tinten unter Verwendung eines Zeilenkopfes (120) ausgebracht werden.

## Revendications

1. Procédé d'impression à jet d'encre dans lequel l'impression est exécutée en déchargeant des encres d'une pluralité de couleurs à partir d'une ouverture de décharge, sous forme de gouttes d'encre destinées à être fixées sur un matériau d'impression,
dans lequel, dans le cas dans lequel l'intervalle entre une décharge d'une encre d'une première couleur et une décharge d'une encre d'une deuxième couleur est de 200 msec ou moins, on utilise des encres dont la tension de surface est de l'ordre de 25 à 45 mN/m à 23 °C pour lesdites encres de chaque couleur, **caractérisé en ce que**
la quantité d'absorption d'encre en 100 msec concernant ledit matériau d'impression est de 15 mL/m² ou plus.

2. Procédé d'impression à jet d'encre selon la revendication 1,
dans lequel les encres sont déchargées en utilisant une tête de conduit (120).

3. Utilisation d'une imprimante à jet d'encre dans laquelle l'impression est réalisée en déchargeant des encres d'une pluralité de couleurs à partir d'une ouverture de décharge sous forme de gouttes d'encre destinées à être fixées sur un matériau d'enregistrement,
dans laquelle, dans le cas dans lequel l'intervalle entre une décharge d'une encre d'une première couleur et une décharge d'une encre d'une deuxième couleur est de 200 msec ou moins, on utilise des encres dont la tension de surface est de l'ordre de 25 à 45 mN/m à 23 °C pour lesdites encres de chaque couleur, **caractérisée en ce que**
la quantité d'absorption d'encre en 100 msec concernant ledit matériau d'impression est de 15 mL/m² ou plus.

4. Utilisation d'une imprimante à jet d'encre selon la revendication 3,
dans laquelle les encres sont déchargées en utilisant une tête de conduit (120).
